# EUROPÄISCHE PATENTSCHRIFT

(11) **EP 1 815 705 B1**
(45) Veröffentlichungstag und Bekanntmachung des Hinweises auf die Patenterteilung: **17.02.2010**
(21) Anmeldenummer: 05803097.4
(22) Anmeldetag: 19.10.2005
(51) Int. Cl.: H04W 36/32

(54) **VERFAHREN ZUR OPTIMIERUNG DER FUNKÜBERTRAGUNG VON DATEN ZWISCHEN EINEM FAHRZEUG UND EINER EXTERNEN GEGENSTELLE**
METHOD FOR OPTIMISING THE RADIO TRANSMISSION OF DATA BETWEEN A VEHICLE AND AN EXTERNAL REMOTE STATION
PROCEDE POUR OPTIMALISER LA RADIOTRANSMISSION DE DONNEES ENTRE UN VEHICULE ET UNE STATION CORRESPONDANTE EXTERNE

(30) Priorität: 17.11.2004 DE 102004055275
(43) Veröffentlichungstag der Anmeldung: 08.08.2007
(73) Patentinhaber: ROBERT BOSCH GMBH, 70442 Stuttgart (DE)
(72) Erfinder: VOGEL, Peter, 31139 Hildesheim (DE); WILDSCHUETTE, Florian, 31139 Hildesheim (DE)
(86) Internationale Anmeldenummer: PCT/EP2005/055380
(87) Internationale Veröffentlichungsnummer: WO 2006/053809

(56) Entgegenhaltungen:
- EP-A- 1 237 387
- WO-A-02/18877
- WO-A-02/101331

## Beschreibung

### Stand der Technik

Die Erfindung betrifft ein Verfahren zur Optimierung der Funkübertragung von Daten zwischen einem Fahrzeug und einer externen Gegenstelle, die als Datenquelle und/oder Datensenke fungiert, insbesondere zur Optimierung der Datenübertragung zwischen einem Fahrzeug und einem externen Datenserver, wobei das Fahrzeug mit einem Fahrerinformationssystem ausgestattet ist und wobei die Datenübertragung unter Berücksichtigung von mit Hilfe des Fahrerinformationssystems ermittelten Informationen und Funknetzinformationen örtlich und zeitlich geplant gesteuert wird. Ein solches Verfahren ist aus der EP 12 37 387 A1 bekannt.

Der Zugriff auf das Internet ist aufgrund der Entwicklung von Mobilfunk-Standards, wie GPRS und UMTS, und aufgrund der zur Verfügung stehenden Mobilfunkinfrastruktur auch mobil möglich. Der spezielle Charakter der Mobilfunknetze erlaubt einen ständigen Online-Zugang ("Always On"), bei dem nur die übertragene Datenmenge, nicht aber die Verbindungszeit abgerechnet wird.

Daneben können Daten auch über kurzreichweitige Funkverfahren (z.B. WLAN) ins Kfz übertragen werden. Die Reichweite beträgt bis zu 300m und der Betrieb erfolgt als Insellösung mit "günstigen" Konditionen für den Datentransport.

Der Datentransfer zwischen Fahrzeugen und dem Internet gewinnt damit zunehmend an Bedeutung, nicht iuletzt weil neue Anwendungen für die mobile Datenübertragung zur Verfügung stehen, die den Anschluss von mobilen Endgeräten an das Internet ermöglichen. So können auch aus einem Fahrzeug heraus e-mails und Multimedia Messages (MMS) abgerufen und versendet werden oder größere Datenmengen gesendet und empfangen werden. Dadurch geraten Aspekte, wie Software Download und Ferndiagnose über das Internet, immer mehr in den Fokus der Automobilindustrie.

An dieser Stelle sei auch der Sonderfall einer gezielten Datenabfrage über den digitalen Rundfunk (DAB) erwähnt. Da die Daten hier im Broadcast-Betrieb verschickt werden, muss für deren Anforderung ein Rückkanal zum Broadcast Provider zur Verfügung stehen.

In der Praxis werden an die Funkverbindung zwischen einem Fahrzeug und dem Internet je nach Charakteristik der zu übertragenden Daten unterschiedliche Anforderungen zu stellen sein. So kann bei bestimmten Anwendungen eine möglichst hohe Übertragungsrate im Vordergrund stehen, während in anderen Fällen die Zuverlässigkeit der Verbindung zu priorisieren ist.

Außerdem gibt es eine Vielzahl von Mobilfunknetzbetreibern, die die Übtragung von Daten zu unterschiedlichsten Konditionen und Kosten anbieten, z.B. Home Zone-Tarife, Vergünstigungen für bestimmte Länder, etc.. Auch durch den Einsatz unterschiedlicher Technologien, wie UMTS, GPRS, GSM, WLAN, Bluetooth, DAB, etc., denen jeweils unterschiedliche Gebührenmodelle und Fixkosten zugrunde liegen, entstehen dem Nutzer unterschiedliche Kosten.

Da der Nutzer eines Fahrzeuges in der Regel nicht weiß, wann ihm entlang seiner Fahrtroute welche Funknetzinfrastruktur zur Verfügung steht und mit welchen Kosten eine Datenübertragung unter Nutzung dieser Funknetzinfrastruktur verbunden ist, erweist sich eine Optimierung der Datenübertragung entlang einer Fahrtroute in der Praxis als problematisch.

### Vorteile der Erfindung

Mit der vorliegenden Erfindung wird vorgeschlagen, die Datenübertragung zwischen einem Fahrzeug und einer externen Gegenstelle örtlich und zeitlich zu planen, um eine Optimierung der Datenübertragung entlang der Fahrtroute des Fahrzeugs zu erreichen.

Erfindungsgemäß werden bei der Planung der Datenübertragung Informationen berücksichtigt, die vom Fahrerinformationssystem des Fahrzeugs ermittelt werden, und Informationen über die für die Datenübertragung zur Verfügung stehenden Funknetze, sogenannte Funknetzinformationen.

Die Erfindung macht sich zu Nutze, dass viele Fahrzeuge bereits mit einem Fahrerinformationssystem mit integrierter Navigation ausgestattet sind, so dass Navigationsinformationen, wie beispielsweise die geplante Fahrtroute, die aktuelle Fahrzeugposition, der Zielort, spezielle Informationen zu bestimmten Koordinaten oder auch Adresslisten, zur Verfügung stehen. Des Weiteren kann ein Fahrerinformationssystem Fahrzeuginformationen, wie z.B. die aktuelle Geschwindigkeit oder ein Geschwindigkeitsprofil über einen bestimmten Zeitraum, liefern und Nutzerinformationen, wie Stand- bzw. Pausenzeiten, konkrete Geschäftstermine, individuelle Nutzerprofile, z.B. zu Gewohnheiten, allgemeines Pausenverhalten, allgemeine Geschwindigkeitsprofile, etc.. Diese Informationen können dazu genutzt werden, die Datenübertragung in und aus einem Fahrzeug während der Fahrt, also entlang einer Fahrtroute, zu optimieren. Erfindungsgemäß werden diese Informationen mit Funknetzinformationen kombiniert, um anhand der verschiedenen Funknetzsysteme, die dem Fahrzeug entlang seiner Fahrtroute zur Verfügung stehen, die Funkverbindung zu wählen, die für den jeweiligen Datentransfer am besten geeignet ist. Neben einem geeigneten Funknetzsystem, bzw. günstigen Netzbetreiber, können anhand von Informationen, wie der aktuellen Fahrzeugposition und Geschwindigkeit, auch automatisch sinnvolle Zeitpunkte und Datenmengen für den anstehenden Datentransfer bestimmt bzw. ausgewählt werden. Bei dieser Auswahl können unterschiedliche Aspekte der Datenübertragung priorisiert werden. Optimierungskriterien können beispielsweise eine möglichst hohe Übertragungsrate, eine möglichst stabile Funkverbindung, eine möglichst gute Erfüllung eines definierten "Quality of Service" QoS, eine möglichst geringe Zahl von Netzanbietern über der Wegstrecke, eine möglichst geringe Verzögerung bei der Bereitstellung der Information und/oder möglichst geringe Kosten für den Datentransfer sein. An dieser Stelle sei angemerkt, dass die Datenübertragung entlang einer Fahrtroute auch im Hinblick auf eine Kombination mehrerer Optimierungskriterien geplant und gesteuert werden kann.

Die Funknetzinformationen umfassen in der Regel Informationen über die Funknetzinfrastruktur. Als Funknetzinformationen können außerdem aber auch Informationen über die örtliche Teilnehmerdichte und/oder Zusatzinformationen der Mobilfunkbetreiber zur Verfügung stehen, wie z. B. Informationen über Übertragungsraten, Kosten und sonstige Konditionen.

In einer vorteilhaften Variante des erfindungsgemäßen Verfahrens können bei der Planung und Steuerung der Datenübertragung zusätzlich zu den vom Fahrerinformationssystem ermittelten Informationen und den Funknetzinformationen Fahrzeugausstattungsinformationen berücksichtigt werden, wie Informationen über die Art des Fahrzeugs und über die Ausstattung des Fahrzeugs mit Sende- und Empfangseinrichtungen. Dadurch kann beispielsweise der besonderen Situation eines Krankenwagens Rechnung getragen werden oder auch der Situation in einem Reisebus mit mehreren Passagieren, die an einem individuellen Datentransfer während einer Reise interessiert sind.

In einer weiteren vorteilhaften Variante des erfindungsgemäßen Verfahrens können bei der Planung und Steuerung der Datenübertragung auch Umweltinformationen berücksichtigt werden, wie Informationen über die aktuelle Verkehrssituation und die aktuelle Wetterlage.

Sämtliche Informationen, die bei der Planung und Steuerung der Datenübertragung entlang einer Fahrtroute berücksichtigt werden, insbesondere die Navigationsinformationen, die Nutzerinformationen, die Funknetzinformation, die Fahrzeugausstattungsinformationen und/oder die Umweltinformationen, können zentral von einem externen Server vorgehalten und von diesem abgerufen werden. In diesem Fall kann die Planung und/oder Steuerung der Datenübertragung von einer externen Datenverarbeitungseinheit vorgenommen werden, die mit dem Fahrerinformationssystem kommuniziert. Ergänzend oder alternativ dazu können die Informationen, die bei der Planung und Steuerung der Datenübertragung berücksichtigt werden, auch lokal im Fahrzeug vorliegen. Dann kann die Planung und Steuerung von einem fahrzeuginternen Logikmodul, beispielsweise vom Fahrerinformationssystem, vorgenommen werden.

Wie bereits erwähnt, hängen die Anforderungen, die an einen Datentransfer zwischen einem Fahrzeug und einer externen Gegenstelle zu stellen sind, von der Art der Daten und letztlich von der dem Datentransfer zugrunde liegenden Anwendung ab. Dementsprechend gibt es verschiedene Möglichkeiten, das erfindungsgemäße Verfahren zu realisieren und auszugestalten.

In einer vorteilhaften Variante des erfindungsgemäßen Verfahrens wird zunächst die gewünschte Fahrtroute bestimmt. Die Datenübertragung wird dann unter Zugrundelegung dieser Fahrtroute bzw. der entsprechenden vom Fahrerinformationssystem ermittelten Navigationsinformationen und unter Zugrundelegung der für diese Fahrtroute vorliegenden Funknetzinformationen geplant. Diese Variante erweist sich beispielsweise als vorteilhaft, wenn große Datenmengen geladen werden sollen und der Upload im Hintergrund zu einem beliebigen Zeitpunkt erfolgen soll, wie z.B. zur Durchführung von automatischen Software-Updates. In diesen Fällen können anhand der Fahrtroute und der Fahrgeschwindigkeit die Streckenabschnitte mit einer geeigneten Netzabdeckung und auch günstige Zeitpunkte für die Datenübertragung bestimmt werden.

In einer anderen vorteilhaften Variante des erfindungsgemäßen Verfahrens werden bereits bei der Bestimmung der Fahrtroute die Funknetzinformationen berücksichtigt, um die Datenübertragung nach einem vorgebbaren Optimierungskriterium zu optimieren. Bei dieser Variante gibt der Nutzer ein Optimierungskriterium oder auch mehrere Optimierungskriterien für die Datenübertragung vor, das bzw. die dann zusammen mit den Funknetzinformationen bei der Planung der Fahrtroute berücksichtigt wird bzw. werden. So kann gewährleistet werden, dass für die Übertragung wichtiger Daten, beispielsweise Patientendaten während eines Krankentransports, zu jedem Zeitpunkt eine Verbindung mit vorgegebener Qualität zur Verfügung steht. Die Bestimmung der Fahrtroute in Abhängigkeit von der zur Verfügung stehenden Funknetzinftastruktur kann aber auch sinnvoll sein, wenn lange Downloads durchgeführt werden sollen.

Bei dieser Variante des erfindungsgemäßen Verfahrens ist es oftmals vorteilhaft, neben den Funknetzinformationen auch Routenkriterien, Nutzerinformationen, Fahrzeugausstattungsinformationen und/oder Umweltinformationen bei der Bestimmung der Fahrtroute zu berücksichtigen. Ein solches Routenkriterium könnte z.B. sein, dass die Fahrtroute nur maximal um eine vorgegebene Distanz oder eine vorgegebene Fahrzeit von der kürzesten oder schnellsten Fahrtroute zwischen dem Ausgangsort und dem Zielort abweichen darf. In diesem Fall ist es sinnvoll, auch die aktuelle Verkehrssituation zu berücksichtigen. Die Fahrzeugart kann ebenfalls eine Rolle bei der Routenplanung spielen, beispielsweise im Falle eines Krankenwagens, der auch gegen Einbahnstraßen fahren darf.

Die Planung der Fahrtroute kann vom Fahrerinformationssystem durchgeführt werden oder auch von einer externen Datenverarbeitungseinheit, die mit dem Fahrerinformationssystem kommuniziert.

### Zeichnungen

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung einiger Ausführungsbeispiele der Erfindung anhand der Zeichnungen verwiesen.
Fig. 1 zeigt das Ablaufdiagramm einer Variante des erfindungsgemäßen Verfahrens zur Optimierung der Funkübertragung von Daten zwischen einem Fahrzeug und einem externen Server,
Fig. 2 zeigt die einzelnen Komponenten eines erfindungsgemäßen Systems zur Optimierung der Funkübertragung von Daten zwischen einem Fahrzeug und einem externen Server und
Fig.3 zeigt einen Kartenausschnitt, der auch die Funknetzinftastruktur des dargestellten Gebiets wiedergibt.

### Beschreibung der Ausführungsbeispiele

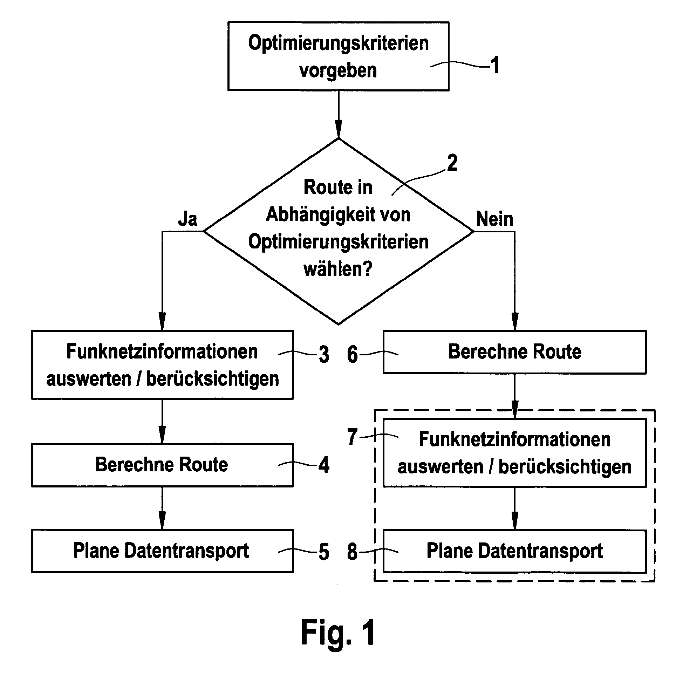

Bei der in Fig. 1 dargestellten Variante des erfindungsgemäßen Verfahrens gibt der Nutzer in einem ersten Schritt 1 ein Optimierungskriterium oder auch mehrere für den anstehenden Datentransfer vor. Je nach Ausgestaltung der Schnittstelle zwischen dem Nutzer und dem System zur Durchführung des Verfahrens kann dies beispielsweise mit Hilfe eines Menüs erfolgen, das bei Aktivierung des Systems automatisch angezeigt wird und dem Nutzer verschiedene Optimierungskriterien zur Auswahl stellt. Die Auswahl kann dann z.B. über eine Tastatur oder ein Touchscreen erfolgen oder auch per Spracheingabe.

In einem zweiten Schritt 2 wird abgefragt, ob die Fahrtroute des Fahrzeugs in Abhängigkeit von diesem mindestens einen Optimierungskriterium für die Datenübertragung oder unabhängig davon bestimmt werden soll.

Soll das Optimierungskriterium bei der Ermittlung der Fahrtroute berücksichtigt werden, so werden dem Fahrerinformationssystem bzw. dem Navigationssystem des Fahrzeugs in Schritt 3 noch vor der Routenberechnung Funknetzinformationen zugeführt. Diese können entweder auf einer fahrzeuginternen Speichereinheit gehalten werden oder auch von einem zentralen externen Server, beispielsweise aus dem Internet, abgerufen werden. In Schritt 4 wird dann eine Fahrtroute berechnet, wobei das Navigationssystem neben den orts- und streckenbezogenen Eingabeparametern für die Navigation auch die Funknetzinformationen und das Optimierungskriterium für den Datentransfer berücksichtigt. An dieser Stelle sei angemerkt, dass bei der Berechnung der Fahrtroute zusätzlich auch Routenkriterien, Umweltinformationen, Nutzerinformationen und/oder Fahrzeugausstattungsinformationen berücksichtigen werden können, was in Fig. 1 allerdings nicht im einzelnen dargestellt ist. Danach erfolgt in Schritt 5 die örtliche und zeitliche Planung des Datentransfers, wobei die Navigationsinformationen der ermittelten Fahrtroute, die entsprechenden Funknetzinformationen und das vorgegebene Optimierungskriterium zugrunde gelegt werden. Auch bei der Planung des Datentransfers können zusätzlich Fahrzeuginformationen, Nutzerinformationen, Fahrzeugausstattungsinformationen und/oder Umweltinformationen berücksichtigt werden. Der Datentransfer kann dann anhand dieser Planung zumindest teilweise auch automatisch während der Fahrt ausgeführt werden.

Soll das Optimierungskriterium bei der Wahl der Fahrtroute nicht berücksichtigt werden, so wird zunächst - in Schritt 6 - eine Fahrtroute bestimmt. Erfolgt diese Bestimmung mit Hilfe des Navigationssystems, so werden dabei lediglich die üblichen orts- und streckenbezogenen Eingabeparameter berücksichtigt. Unabhängig von der Routenbestimmung werden in Schritt 7 Funknetzinformationen abgerufen. Diese werden zusammen mit den die Fahrtroute betreffenden Navigationsinformationen und dem Optimierungskriterium der örtlichen und zeitlichen Planung des Datentransfers in Schritt 8 zugrunde gelegt.

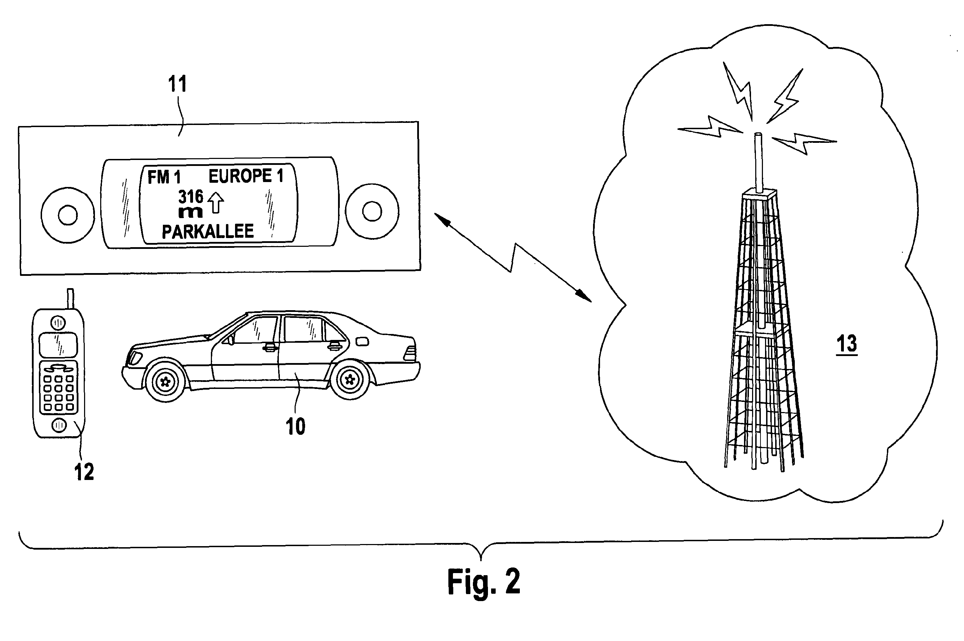

Wie bereits am Beispiel der Schnittstelle zwischen Nutzer und System gezeigt, können die einzelnen Funktionen des erfindungsgemäßen Systems zur Optimierung der Funkübertragung von Daten zwischen einem Fahrzeug und einer externen Gegenstelle durch unterschiedliche Komponenten realisiert werden, was anhand von Fig. 2 näher erläutert werden soll. Auf jeden Fall muss das Fahrzeug 10 über ein Fahrerinformationssystem 11 verfügen, das die für die Planung des Datentransfers erforderlichen Navigationsinformationen liefert. Außerdem muss im Fahrzeug 10 ein Funkmodul 12 vorhanden sein, um eine Funkverbindung zu einer externen Gegenstelle, z.B. einem Datenserver, zu realisieren. Es sind bereits Navigationsgeräte mit integriertem Mobilfunkmodul bekannt, die gut für eine Realisierung des hier in Rede stehenden Systems verwendet werden können. Des Weiteren sind Mittel zum Bereitstellen und Aktualisieren von Funknetzinformationen erforderlich. Bei dem in Fig. 2 dargestellten Ausführungsbeispiel handelt es sich dabei um einen externen Server 13, von dem immer aktuelle Funknetzinformationen abgerufen werden können. Eine entsprechende Datenbasis könnte ergänzend oder auch alternativ dazu lokal im Fahrzeug gehalten werden, z.B. über eine Festplatte oder eine CD. Schließlich muss im Fahrzeug 10 ein Logikmodul für die Organisation der Datenübertragung vorhanden sein. Dieses Logikmodul ist hier nicht im Einzelnen dargestellt, da es beispielsweise in das Fahrerinformationssystem 11 oder in das Funkmodul 12 integriert werden kann. Die Funktionen des Logikmoduls können aber auch von anderen mobilen Endgeräten, wie z.B. PDAs, übernommen werden, wenn diese mit der erforderlichen Infrastruktur, wie Rechenleistung, Speicher, Ports, Displays und Kommunikationsmodulen auf der Basis von GSM, GPRS, Bluetooth, etc., ausgestattet sind.

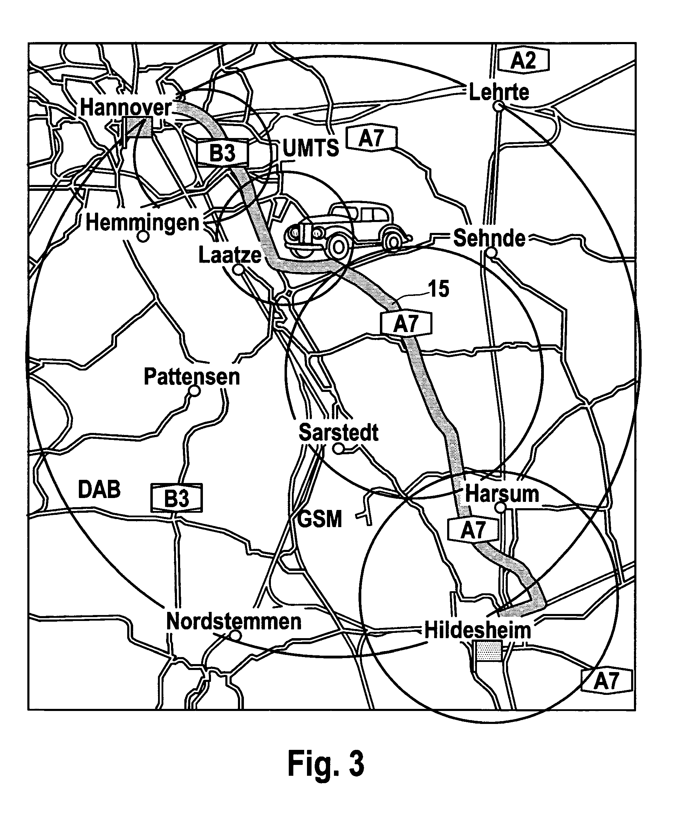

Ein Anwendungsbeispiel für das erfindungsgemäße Verfahren zur Optimierung der Funkübertragung von Daten zwischen einem Fahrzeug und einem externen Server wird nachfolgend anhand des in Fig. 3 dargestellten Kartenausschnitts erläutert, in dem eine Fahrtroute 15 von Hildesheim nach Hannover eingezeichnet ist sowie die räumliche Abdeckung dieser Fahrtroute 15 durch verschiedene Mobilfunksysteme, nämlich GSM und UMTS, und durch digitalen Rundfunk DAB.

Der Nutzer eines Fahrzeugs 10 möchte von Hildesheim nach Hannover fahren. Während der Fahrt möchte er einige Telefonate erledigen, e-mails versenden und abrufen. Außerdem hat er vor, sich während der Fahrt über aktuelle Ausstellungen in den hannoverschen Museen zu informieren. Diese Informationen werden über DAB ausgestrahlt. Außerdem hat der Fahrzeughersteller im Display angezeigt, dass ein größeres Softwarepaket für die Optimierung von Fahrzeugfunktionen zum Download bereitsteht.

Im hier beschriebenen Anwendungsbeispiel lässt sich der Nutzer zunächst eine Fahrtroute 15 berechnen und gibt dazu "Hannover" als Zielort in die Navigation des Fahrzeugs 10 ein. Die resultierenden Navigationsinformationen werden an einen externen Server oder an eine im Fahrzeug vorhandene "Control Unit" gemeldet. Dort liegen Informationen über die Funknetzinfrastruktur vor, so dass der Server bzw. die "Control Unit" die Funkverbindungen ermitteln kann, die entlang der Fahrtroute 15 zur Verfügung stehen. Diese Informationen werden an ein Logikmodul im Fahrzeug übermittelt, das den vom Nutzer gewünschten Datentransfer plant und steuert, so dass zumindest ein Teil des Datentransfers auch automatisch ablaufen kann, hier das Abrufen und Versenden von e-mails. Die zu übertragenden Daten werden in kleine Pakete geteilt, die unabhängig voneinander gesendet werden und beim Empfänger wieder zusammengesetzt werden können. Funkverfahren, Zeitpunkt, Provider, Inhalt und Datenteilung können in Abhängigkeit von der Fahrzeuggeschwindigkeit, dem Zeitpunkt und/oder dem Datenprofils automatisch gewählt werden.

Im hier beschriebenen Anwendungsbeispiel hat der Nutzer die Möglichkeit, auf der gesamten Strecke entweder über eine GSM-Verbindung oder über eine UMTS-Verbindung zu telefonieren. Es wird empfohlen, e-mails im Stadtgebiet von Hannover abzurufen und zu versenden, da dort eine schnelle UMTS-Verbindung genutzt werden kann. Sobald sich das Fahrzeug auf der Höhe des Ortes Harsum befindet, können die gewünschten Informationen über die Ausstellungen in hannoverschen Museen empfangen werden, da sich das Fahrzeug 10 dann im Bereich der DAB-Abdeckung befindet. Da als Fahrziel eine Straße in der Umgebung einer Werkstatt des Herstellers angegeben ist, wird das Softwarepaket über den lokalen WLAN Funkservice der Werkstatt durchgeführt.

## Patentansprüche

1. Verfahren zur Optimierung der Funkübertragung von Daten zwischen einem Fahrzeug (10) und einer externen Gegenstelle (13), die als Datenquelle und/oder Datensenke fungiert, insbesondere zur Optimierung der Datenübertragung zwischen einem Fahrzeug und einem externen Datenserver, wobei das Fahrzeug (10) mit einem Fahrerinformationssystem (11) ausgestattet ist und wobei die Datenübertragung unter Berücksichtigung von mit Hilfe des Fahrerinformationssystems (11) ermittelten Informationen und Funknetzinformationen örtlich und zeitlich geplant und gesteuert wird,
**dadurch gekennzeichnet, dass** bereits bei einer vom Fahrerinformationssystem (11) durchgeführten Planung einer Fahrtroute (15) des Fahrzeugs (10) sowohl mindestens ein vom Nutzer vorgebbares Optimierungskriterium für die Datenübertragung als auch die zur Verfügung stehende Funknetzinfrastruktur berücksichtigt wird.

2. Verfahren nach Anspruch 1, **dadurch gekennzeichnet, dass** die vom Fahrerinformationssystem (11) ermittelten Informationen
- Navigationsinformationen, wie die geplante Fahrtroute (15), die aktuelle Fahrzeugposition, der Zielort, spezielle Informationen zu bestimmten Koordinaten, Adresslisten,
- Fahrzeuginformationen, wie die aktuelle Geschwindigkeit und das Geschwindigkeitsprofil über einen bestimmten Zeitraum, und/oder
- Nutzerinformationen, wie konkrete Pausenzeiten, konkrete Geschäftstermine, individuelle Nutzerprofile, z.B. zu Gewohnheiten, allgemeines Pausenverhalten, allgemeines Geschwindigkeitsprofil,
umfassen.

3. Verfahren nach einem der Ansprüche 1 oder 2, **dadurch gekennzeichnet, dass** die Funknetzinformationen Informationen über die Funknetzinfrastruktur, über die örtliche Teilnehmerdichte, über die Übertragungsrate und/oder über die Kosten und Konditionen der Übertragung umfassen.

4. Verfahren nach einem der Ansprüche 1 bis 3, **dadurch gekennzeichnet, dass** bei der Planung der Fahrtroute (15) außerdem Routenkriterien, wie maximale Werte für die Abweichung von der schnellsten/kürzesten Route, berücksichtigt werden.

5. Verfahren nach einem der Ansprüche 1 bis 4, **dadurch gekennzeichnet, dass** bei der Planung der Fahrtroute (15) außerdem Nutzerinformationen, Fahrzeugausstattungsinformationen und/oder Umweltinformationen, wie Informationen über die aktuelle Verkehrssituation und/oder die aktuelle Wetterlage, berücksichtigt werden.

6. Verfahren nach einem der Ansprüche 1 bis 5, **dadurch gekennzeichnet, dass** bei der Planung und Steuerung der Datenübertragung außerdem Fahrzeugausstattungsinformationen berücksichtigt werden, wie Informationen über die Art des Fahrzeugs (10) und/oder über die Ausstattung mit Einrichtungen zur Funkübertragung.

7. Verfahren nach einem der Ansprüche 1 bis 6, **dadurch gekennzeichnet, dass** bei der Planung und Steuerung der Datenübertragung außerdem Umweltinformationen berücksichtigt werden.

8. Verfahren nach einem der Ansprüche 1 bis 7, **dadurch gekennzeichnet, dass** Navigationsinformationen, Nutzerinformationen, die Funknetzinformationen, die Fahrzeugausstattungsinformationen und/oder die Umweltinformationen von einer Datenquelle, insbesondere von einem externen Server (13), außerhalb des Fahrzeugs (10) abgerufen werden.

9. Verfahren nach Anspruch 8, **dadurch gekennzeichnet, dass** die Planung und/oder die Steuerung der Datenübertragung von einer externen Datenverarbeitungseinheit vorgenommen wird, die mit dem Fahrerinformationssystem (11) kommuniziert.

10. Verfahren nach einem der Ansprüche 8 oder 9, **dadurch gekennzeichnet, dass** die Planung der Fahrtroute (15) von einer, externen Datenverarbeitungseinheit vorgenommen wird, die mit dem Fahrerinformationssystem (11) kommuniziert.

11. Verfahren nach einem der Ansprüche 1 bis 7, **dadurch gekennzeichnet, dass** die vom Fahrerinformationssystem (11) ermittelten Informationen, die Funknetzinformationen, die Fahrzeugausstattungsinformationen und/oder die Umweltinformationen lokal im Fahrzeug (10) vorgehalten werden.

12. Verfahren nach Anspruch 11, **dadurch gekennzeichnet, dass** die Planung und/oder die Steuerung der Datenübertragung von einem fahrzeuginternen Logikmodul, insbesondere vom Fahrerinformationssystem (11), vorgenommen wird.

13. Verfahren nach einem der Ansprüche 1 bis 12, **dadurch gekennzeichnet, dass** zunächst eine Fahrtroute (15) bestimmt wird und dass die Datenübertragung dann geplant wird.

## Claims

1. Method for optimizing the radio transmission of data between a vehicle (10) and an external remote station (13) which acts as a data source and/or data sink, particularly for optimizing the data transmission between a vehicle and an external data server, wherein the vehicle (10) is equipped with a driver information system (11) and wherein the data transmission is planned and controlled in terms of locality and timing taking account of information and radio network information ascertained using the driver information system (11),
**characterized in that** planning of a journey route (15) for the vehicle (10) as performed by the driver information system (11) actually takes account of both at least one optimization criterion for the data transmission, which can be prescribed by the user, and the available radio network infrastructure.

2. Method according to Claim 1, **characterized in that** the information ascertained by the driver information system (11) comprises
- navigation information, such as the planned journey route (15), the current vehicle position, the destination, specific information relating to particular coordinates, address lists,
- vehicle information, such as the current speed and the speed profile over a particular period, and/or
- user information, such as specific break times, specific business appointments, individual user profiles, e.g. relating to habits, general break behaviour, general speed profile.

3. Method according to one of Claims 1 and 2, **characterized in that** the radio network information comprises information about the radio network infrastructure, about the local subscriber density, about the transmission rate and/or about the costs and conditions of the transmission.

4. Method according to one of Claims 1 to 3, **characterized in that** the planning of the journey route (15) also involves route criteria, such as maximum values for the deviation from the fastest/shortest route, being taken into account.

5. Method according to one of Claims 1 to 4, **characterized in that** the planning of the journey route (15) also involves user information, vehicle equipment information and/or environmental information, such as information about the current travel situation and/or the current weather being taken into account.

6. Method according to one of Claims 1 to 5, **characterized in that** the planning and control of the data transmission also involves vehicle equipment information being taken into account, such as information about the type of vehicle (10) and/or about the equipment with devices for radio transmission.

7. Method according to one of Claims 1 to 6, **characterized in that** the planning and control of the data transmission also involves environmental information being taken into account.

8. Method according to one of Claims 1 to 7, **characterized in that** navigation information, user information, the radio network information, the vehicle equipment information and/or the environmental information is retrieved from a data source particularly from an external server (13) outside the vehicle (10).

9. Method according to Claim 8, **characterized in that** the planning and/or control of the data transmission is performed by an external data processing unit which communicates with the driver information system (11).

10. Method according to one of Claims 8 and 9, **characterized in that** the planning of the journey route (15) is performed by an external data processing unit which communicates with the driver information system (11).

11. Method according to one of Claims 1 to 7, **characterized in that** the information ascertained by the driver information system (11), the radio network information, the vehicle equipment information and/or the environmental information is held locally in the vehicle (10).

12. Method according to Claim 11, **characterized in that** the planning and/or control of the data transmission is performed by a vehicle-internal logic module, particularly by the driver information system (11).

13. Method according to one of Claims 1 to 12, **characterized in that** a journey route (15) is determined first of all and then the data transmission is planned.

## Revendications

1. Procédé d'optimisation de la transmission radioélectrique de données entre un véhicule (10) et un correspondant externe (13) qui fait office de source de données et/ou de collecteur de données, notamment pour optimiser la transmission de données entre un véhicule et un serveur de données externe, le véhicule (10) étant équipé d'un système d'information du conducteur (11) et la transmission de données étant planifiée et commandée localement et dans le temps en tenant compte des informations déterminées à l'aide du système d'information du conducteur (11) et des informations du réseau radioélectrique, **caractérisé en ce qu'**au moins un critère d'optimisation de la transmission de données pouvant être prédéfini par l'utilisateur ainsi que l'infrastructure de réseau radioélectrique disponible sont pris en considération déjà lors de la planification d'un itinéraire (15) du véhicule (10) réalisé par le système d'information du conducteur (11).

2. Procédé selon la revendication 1, **caractérisé en ce que** les informations déterminées par le système d'information du conducteur (11) englobent
- des informations de navigation telles que l'itinéraire planifié (15), la position actuelle du véhicule, le lieu de destination, des informations spéciales à propos de certaines coordonnées, listes d'adresse,
- des informations sur le véhicule telles que la vitesse actuelle et le profil de vitesse sur une période donnée et/ou
- des informations sur l'utilisateur telles que les temps de pause concrets, les rendez-vous professionnels concrets, les profils d'utilisateur individuels, par exemple à propos des habitudes, les habitudes de pause en général, le profil de vitesse général.

3. Procédé selon la revendication 1 ou 2, **caractérisé en ce que** les fonctions sur le réseau radioélectrique englobent des informations sur l'infrastructure du réseau radioélectrique, sur la densité d'abonnés locale, sur la vitesse de transmission et/ou sur le coût et les conditions de la transmission.

4. Procédé selon l'une des revendications 1 à 3, **caractérisé en ce que** des critères d'itinéraire comme, par exemple, les valeurs maximales de l'écart par rapport au trajet le plus rapide / le plus court, sont pris en compte lors de la planification de l'itinéraire (15).

5. Procédé selon l'une des revendications 1 à 4, **caractérisé en ce que** des informations sur l'utilisateur, des informations sur l'équipement du véhicule et/ou des informations sur l'environnement comme, par exemple, des informations sur la situation de trafic actuelle et/ou les conditions météorologiques actuelles sont en plus prises en compte lors de la planification de l'itinéraire (15).

6. Procédé selon l'une des revendications 1 à 5, **caractérisé en ce que** des informations sur l'équipement du véhicule comme, par exemple, des informations sur le modèle de véhicule (10) et/ou sur l'équipement avec des dispositifs de transmission radioélectrique sont en plus prises en compte lors de la planification et de la commande de la transmission de données.

7. Procédé selon l'une des revendications 1 à 6, **caractérisé en ce que** des informations sur l'environnement sont en plus prises en compte lors de la planification et de la commande de la transmission de données.

8. Procédé selon l'une des revendications 1 à 7, **caractérisé en ce que** les informations de navigation, les informations sur l'utilisateur, les informations sur le réseau radioélectrique, les informations sur l'équipement du véhicule et/ou les informations sur l'environnement sont invoquées auprès d'une source de données à l'extérieur du véhicule (10), notamment un serveur externe (13).

9. Procédé selon la revendication 8, **caractérisé en ce que** la planification et/ou la commande de la transmission de données est effectuée par une unité de traitement de données externe qui communique avec le système d'information du conducteur (11).

10. Procédé selon l'une des revendications 8 ou 9, **caractérisé en ce que** la planification de l'itinéraire (15) est effectué par une unité de traitement de données qui communique avec le système d'information du conducteur (11).

11. Procédé selon l'une des revendications 1 à 7, **caractérisé en ce que** les informations déterminées par le système d'information du conducteur (11), les informations sur le réseau radioélectrique, les informations sur l'équipement du véhicule et/ou les informations sur l'environnement sont conservées localement dans le véhicule (10).

12. Procédé selon la revendication 11, **caractérisé en ce que** la planification et/ou la commande de la transmission de données est effectuée par un module logique interne du véhicule, notamment par le système d'information du conducteur (11).

13. Procédé selon l'une des revendications 1 à 12, **caractérisé en ce qu'**un itinéraire (15) est tout d'abord défini et que la transmission de données est planifiée ensuite.
